(19) Europäisches Patentamt
European Patent Office
Office européen des brevets

(11) **EP 3 015 846 A1**

(12) **EUROPÄISCHE PATENTANMELDUNG**

(43) Veröffentlichungstag:
**04.05.2016 Patentblatt 2016/18**

(51) Int Cl.:
*G01N 9/00* *(2006.01)*   *G01F 23/00* *(2006.01)*

(21) Anmeldenummer: **15189384.9**

(22) Anmeldetag: **12.10.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **03.11.2014 AT 507922014**

(71) Anmelder: **Anton Paar GmbH**
**8054 Graz-Straßgang (AT)**

(72) Erfinder: **Breidler, Robert**
**8020 Graz (AT)**

(74) Vertreter: **Wildhack & Jellinek**
**Patentanwälte**
**Landstraßer Hauptstraße 50**
**1030 Wien (AT)**

(54) **VERFAHREN ZUR ERMITTLUNG DES BEFÜLLUNGSGRADS EINES SCHWINGERROHRS EINES BIEGESCHWINGERS UND BIEGESCHWINGER**

(57)   Die Erfindung betrifft ein Verfahren zur Ermittlung des Befüllungsgrads eines Schwingerrohrs eines Biegeschwingers mit einem zu untersuchenden Fluid, insbesondere im Zusammenhang mit der Dichtemessung von Fluiden mit diesem Biegeschwinger Die Erfindungsgemäß ist vorgesehen,

- dass mit Hilfe von Justier- oder Kalibrierstandards für das zu untersuchende Fluid oder für unterschiedliche Viskositäten besitzende Fluide der Zusammenhang zwischen der Dämpfung und/oder Schwingungsamplitude des Biegeschwingers und dem Befüllungsgrad des Schwingerrohrs ermittelt wird, und

- dass im Zuge der Ermittlung des Befüllungsgrads ein für die Dämpfung und/oder Schwingungsamplitude des Biegeschwingers relevanter Parameter gemessen und dieser Messwert als für den Befüllungsgrad relevant und in funktionalem Zusammenhang stehend angesehen und zur Auswertung oder Ermittlung des Befüllungsgrads herangezogen wird.

Fig. 1

**Beschreibung**

Die Erfindung betrifft ein Verfahren zur Ermittlung des Befüllungsgrads eines Schwingerrohrs eines Biegeschwingers mit einem zu untersuchenden Fluid, insbesondere im Zusammenhang mit der Dichtemessung von Fluiden mit diesem Biegeschwinger. Ferner betrifft die Erfindung einen Biegeschwinger gemäß dem Oberbegriff des Patentanspruches 6.

Die Messung der Dichte von fluiden Medien mit einem Biegeschwinger beruht auf der Tatsache, dass die Schwingung eines mit einer zu untersuchenden Probe gefüllten Hohlkörpers von der Füllung des Hohlkörpers, insbesondere von der Masse bzw., wenn das Volumen konstant ist, von der Dichte des eingefüllten Mediums abhängt.

Ein Biegeschwinger wird von einem hohlen, U-förmig gebogenen, gläsernen oder metallischen Rohr gebildet, das auf elektronischem Weg zu einer Schwingung, vor allem zu Resonanzschwingungen, angeregt wird. Die beiden Schenkel des U-förmigen Rohrs bilden die Federelemente des Biegeschwingers. Die Eigenfrequenz des U-förmigen Schwingerrohres wird von jenem Teil der Probe beeinflusst, welcher an der Schwingung tatsächlich teilnimmt bzw. sich im Rohr befindet. Das an der Schwingung teilnehmende Volumen ist durch die ruhenden Schwingknoten an den beiden Einspannstellen des Rohres begrenzt. Ist der Schwinger mindestens bis zu den Einspannstellen gänzlich mit der Probe gefüllt, nimmt immer dasselbe, genau definierte Volumen an der Schwingung teil und die Masse der Probe kann daher proportional zu ihrer Dichte angenommen werden. Eine Überfüllung des Schwingers über die Einspannstellen hinaus ist für die Messung belanglos. Aus diesem Grund können mit dem Schwinger auch Dichten von Medien gemessen werden, die den Schwinger bzw. das Schwingerrohr durchströmen. Probleme stellen sich jedoch ein, wenn das Schwingrohr nicht gänzlich gefüllt ist.

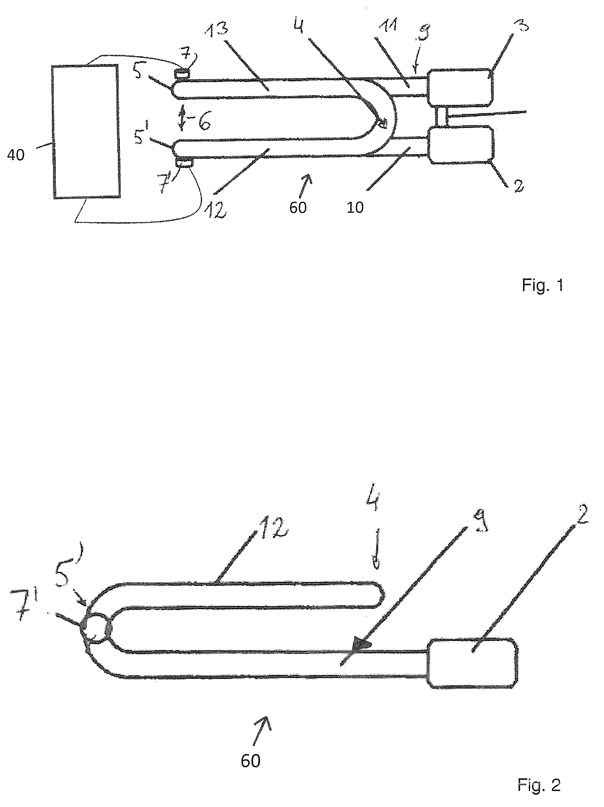

Fig. 1 und 2 zeigen das Grundprinzip eines erfindungsgemäß einsetzbaren Biegeschwingers, hier in Form eines Doppelbugschwingers mit Massenausgleich, wobei allerdings allenfalls eingesetzte Dämpfungselemente nicht dargestellt sind. Dieser Doppelbug-Biegeschwinger 60 umfasst ein in einem Bereich 4 U-förmig abgebogenes Schwingerrohr 9, dessen Enden bzw. Schenkel 10, 11 mit jeweils einem Endanschluss 2, 3 verbunden sind. Für die Durchführung einer Dichtemessung wird das Rohr 9 über die Endanschlüsse bzw. Träger 2, 3 mit Fluid durchströmt. In Biegebereichen 5, 5' ist der Längsmittenbereich des Rohres 9 mit der Basis 4 in Richtung auf die Endanschlüsse 2, 3 ab- bzw. zurückgebogen uns bildet weitere Schenkel 12, 13 aus, wie dies aus Fig. 2 ersichtlich ist. In zumindest einem der Biegebereiche 5 ist ein Schwingungserreger 7 und im jeweils gegenüberliegenden Biegebereich 5' ist eine Messeinheit 7' für zumindest einen Schwingungsparameter, vorzugsweise die Schwingungsamplitude, vorgesehen, der zur Anregung einer Schwingung eingesetzt bzw. berücksichtigt wird. In der Praxis werden somit ein oder zwei Schwingungserreger 7 und ein oder zwei Messeinheiten 7' vorgesehen. Mit dem von der Messeinheit 7 signalbeaufschlagtem Schwingungserreger 7 werden das Rohr 9 bzw. die Biegebereiche 5, 5' in Schwingung versetzt, wobei die Biegebereiche 5, 5' aufeinander zu bzw. voneinander weg schwingen, wie dies mit dem Pfeil 6 dargestellt ist. Die Abnahme des Schwingungsparameters erfolgt mit einer als Schwingungsdetektor ausgebildeten Messeinheit 7'. Die Schwingungsanregung und die Abnahme der Schwingungsparameter erfolgt vorteilhafterweise elektromagnetisch gesteuert bzw. überwacht mit einer Mess- bzw. Sensorelektronik 40 bzw. mit einer dargestellten Steuereinheit, die insbesondere mit dem Schwingungserreger 7 bzw. mit dem Schwingungsdetektor 7' verbunden ist. Abhängig vom Messwert der Messeinheit 7' wird der Schwingungserreger 7 angesteuert um zum vorgegebenen Zeitpunkt das Schwingrohr anzutreiben bzw. zu erregen.

Die Einspannstelle des Schwingerrohrs ist dabei immer als sogenannter Schwingungsknoten des schwingenden Systems zu betrachten, eine Befüllung des Schwingerrohrs über diesen Halte- und Einspannpunkt hinaus spielt bei der Schwingung keine Rolle und trägt zur Messung nicht bei.

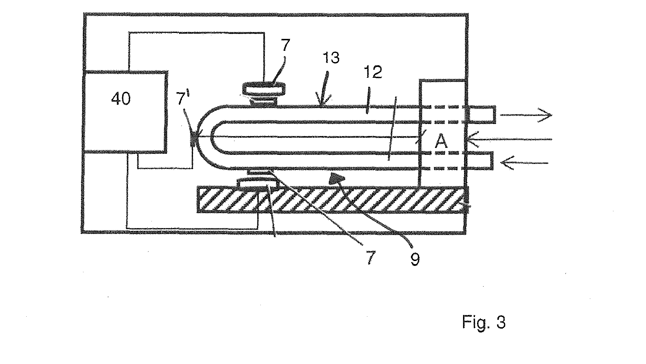

Bei einem "Y-Schwinger", so wie in Fig. 3 schematisch dargestellt, schwingt das U-förmig gebogene Rohr 1 senkrecht zu der Ebene, die durch die beiden Schenkel 2, 3 des Rohres 1 aufgespannt wird. Prinzipiell sind auch Schwingungsmoden anregbar, bei denen die Schenkel 2, 3 des gebogenen Rohres 9 in dieser Ebene gegeneinander schwingen. Dabei sind für den Schwinger bestimmte Resonanzfrequenzen vorhanden, in denen der Schwinger bzw. das Rohr 9 nahezu ungedämpft schwingen.

Neben Apparatekonstanten, z.B. wie Material und Abmessungen des Schwingers, bestimmt die Dichte des zu untersuchenden Fluids die spezifischen Frequenzen, in denen das U-Rohr in Resonanz schwingt. Verwendet man also immer dasselbe Rohr, insbesondere Glasrohr oder Metallrohr, so variieren die Eigenschaften des Schwingers mit der Dichte der Flüssigkeit. Die Resonanz-Frequenzen werden im Hinblick auf die Anregung und Abnahme der Schwingungen ausgewertet und aus der Periodendauer wird die Dichte des eingefüllten Fluiden bestimmt. Der Schwinger wird mit Fluiden bekannter Dichte justiert bzw. kalibriert, sodass die Messwerte direkt auswertbar werden.

Für die Periodendauer P eines Biegeschwinger in der Grundschwingung gilt:

$$P = 2\pi \sqrt{\frac{(m + \rho V)}{R}} \tag{1}$$

daraus ergibt sich durch Umformen für die Dichte: $\rho = P^2 \dfrac{R}{4\pi^2 V} - \dfrac{m}{V} = A\,P^2 - B$, wobei m die schwingende Masse, $\rho$ die Dichte des Fluids und V das Rohrvolumen sind und R eine Konstante des Schwingers ist, in die u.a. das Material und die Schwingungsform des verwendeten Schwingers eingehen.

Die Justierkonstanten A und B werden für den jeweiligen Schwinger durch Messungen mit Fluiden bekannter Dichte ermittelt und in der Auswerteeinheit des Schwingers hinterlegt.

Bei Biegeschwingern wird also die Änderung der Eigenfrequenz einer Biegeschwingungsmode und/oder die Periodendauer P derselben bei Befüllung des Rohres mit Fluiden dazu benutzt, um auf die Dichte des Mediums zu schließen.

Neben den Laborschwingern mit großer Gegenmasse sind auch Doppelbugschwinger bekannt, die durch die Verwendung von zwei U-Rohren, die gegeneinander schwingen, bei guter Genauigkeit die große Gegenmasse verzichtbar machen und damit auch für leichte und kleine Handmessgeräte zur Verfügung stehen.

Speziell in den meisten Anwendungsfällen dieser Handdichtemessgeräte werden großteils wässrige Lösungen untersucht, z.B. gärenden Proben in der Wein- und Bierindustrie, deren Viskositätswert vom Wasserwert kaum abweicht. Alternativ können Dichtemessgeräte für spezielle Anwendungsfälle bereits durch Berücksichtigung des Viskositätswertes für das Fluid der jeweiligen speziellen Anwendung über die Justierkonstanten bereits ausgebildet werden und die Ausgabe des Dichtewertes des Biegeschwingers bereits korrigiert vorliegen. Über die Dämpfungsmessung kann somit die Viskosität korrigiert werden. Für spezielle Anwendungsfälle ist aber eine Viskositätskorrektur der Dichtemessung mittels Dämpfungsmessung nicht nötig.

Bekannt ist, dass die Viskosität des zu untersuchenden Mediums Einfluss auf die Ergebnisse der Dichtemessung hat. Unterschiedliche Korrekturverfahren sind für diese Viskositätskorrektur bekannt; sie beruhen auf der Tatsache, dass die Dämpfung des Schwingers in funktionalem Zusammenhang mit der Viskosität steht und dieser Zusammenhang durch Messung eines für die Dämpfung charakteristischen Parameters ausgewertet werden kann. Dies unter der Annahme, dass das Schwingerrohr blasenfrei befüllt ist bzw. die Füllung keine Inhomogenitäten zeigt.

Die Erfindung setzt sich die Aufgabe, Füllfehler zu erkennen bzw. den Befüllungsgrad zu ermitteln, indem zusätzlich zu einer Eigenfrequenz des Biegeschwingers auch die Dämpfung des Biegeschwingers gemessen wird und eine Auswertung bezüglich Füllungsinhomogenität des Schwingrohres vorgenommen wird. Die Dämpfung bzw. ein für die Dämpfung relevanter Parameter wird somit für die Erkennung von Blasen und/oder Inhomogenitäten in der Befüllung herangezogen.

Diese Aufgabe wird bei einem Verfahren der eingangsgenannten Art mit den im Kennzeichen des Anspruches 1 angegebenen Merkmalen gelöst. Es ist vorgesehen,

- dass mit Hilfe von Justier- oder Kalibrierstandards für das zu untersuchende Fluid oder für unterschiedliche Viskositäten besitzende Fluide der Zusammenhang zwischen der Dämpfung und/oder Schwingungsamplitude des Biegeschwingers und dem Befüllungsgrad des Schwingerrohrs ermittelt wird, und
- dass im Zuge der Ermittlung des Befüllungsgrads ein für die Dämpfung und/oder Schwingungsamplitude des Biegeschwingers relevanter Parameter gemessen und dieser Messwert als für den Befüllungsgrad relevant und in funktionalem Zusammenhang stehend angesehen und zur Auswertung oder Ermittlung des Befüllungsgrads herangezogen wird.

Überraschend zeigt es sich, dass exakte Messwerte über das Vorhandensein und das Ausmaß von Inhomogenitäten, insbesondere Glasblasen, im zu untersuchenden Fluid erhalten werden können, auch wenn der Befüllungsgrad der beiden Rohrschenkel unterschiedlich ist. Auch eine unterschiedliche Verteilung der Inhomogenitäten bzw. Blasen in den beiden Rohrschenkeln beeinflusst die Messergebnisse nicht in einem nicht tolerierbaren Ausmaß. Die zu erwarten gewesenen Einflüsse von unregelmäßig verteilten Inhomogenitäten spielen bei der erfindungsgemäßen Vorgangsweise keine nennenswerte Rolle.

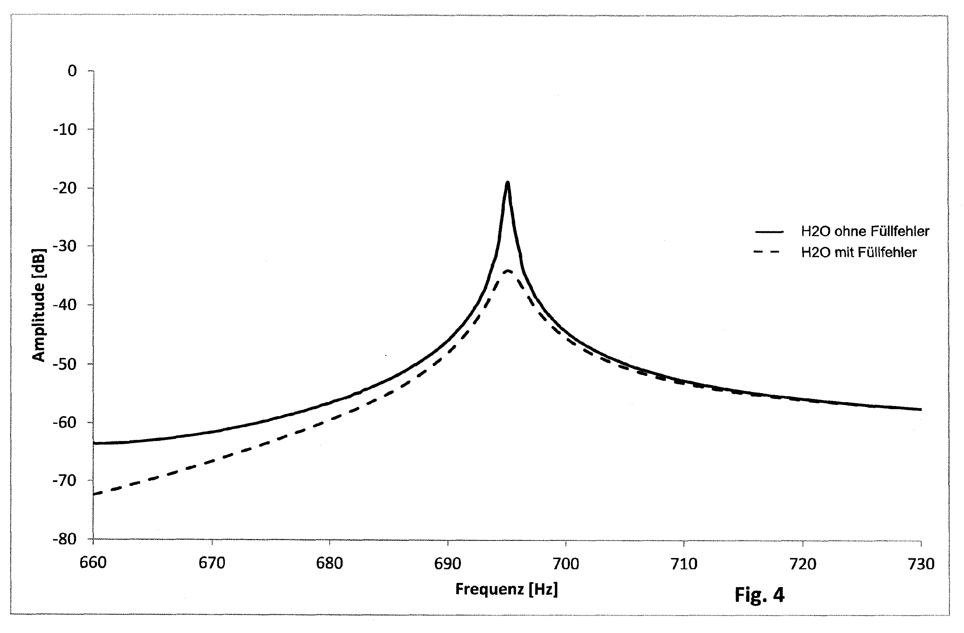

Untersucht man einen Biegeschwinger hinsichtlich des Amplituden über ein breitere Frequenzspektrum um seine Resonanzfrequenz, im vorliegenden Fall: Wasser, einmal mit und einmal ohne Gasblasen in der Flüssigkeit, so erkennt man ein klar unterschiedliches Verhalten, wie in Fig. 4 dargestellt.

Fig. 4 zeigt die unterschiedlichen Amplituden ein - und desselben Schwingers einmal mit und einmal ohne Luftbläschen bei der Messung von Wasser. Man erkennt hier also klar den Einfluss von Blasen auf die Dämpfung des Schwingers durch den breiteren, "verwascheneren" Amplitudenpeak im Frequenzspektrum. Der inhomogen befüllte Schwinger zeigt eine stärkere Dämpfung als der homogen befüllte.

Erfindungsgemäß ist vorgesehen, dass zur Ermittlung des für die Dämpfung relevanten Parameters der Biegeschwinger in seiner jeweiligen Resonanzfrequenz durch zwei verschiedene Phasenlagen erregt wird und die zu der jeweiligen Phasenlage gehörige Resonanzfrequenz ermittelt und daraus auf den Befüllungsgrad geschlossen wird. Die Dämpfung eines derartigen Schwingungsgebildes kann einfach ermittelt werden, indem der Biegeschwinger in seiner Resonanzfrequenz durch zwei verschiedene Phasenlagen erregt wird, die zugehörigen Frequenzen gemessen werden und daraus die Dämpfung errechnet wird. Es ist vorteilhaft, die Phasenlage zwischen Anregesignal und Abnahmesignal, die in der Regel 90° beträgt, zu verstimmen bzw. abzuändern, z.B. auf einen Wert von 45° einzustellen. Dies erfolgt mit einer mit dem Abnahmesignal gespeisten Steuereinheit, welche die Anregung entsprechend ein- bzw. verstellt.

Dazu wird in den Schaltkreis der Steuereinheit zur Anregung und Abnahme der Schwingerfrequenzen eine zusätzliches Element bzw. Phasendreher eingebracht, das die Phase zwischen Anregung und Abnahme drehen bzw. verändern kann. Allgemein gilt für die Dämpfung $\vartheta$ bzw. für die Güte des Schwingers:

$$Q = f(\, f_1, f_2, \varphi_1, \varphi_2)$$

Der Schwinger wird also abwechselnd bzw. für bestimmte Zeitspannen mit Signalen unterschiedlicher Phasenlage zur Schwingung angeregt. Für die Schwingung in der abgeänderten Phasenlage wird das Erregersignal, mit dem der Schwinger zu seiner Resonanzfrequenz angeregt wird, gegenüber dem Erregungszeitpunkt zeitversetzt, d.h. phasenverschoben, sodass eine geänderte, verstimmte Resonanzfrequenz resultiert. Prinzipiell bleibt die Eigenfrequenz des Schwingers gleich, die phasenverschobene Anregung verstimmt den Schwinger jedoch und das resultiert in einer leicht geänderten Frequenz. Diese Änderung wird größer, wenn der Schwinger nicht korrekt befüllt ist.

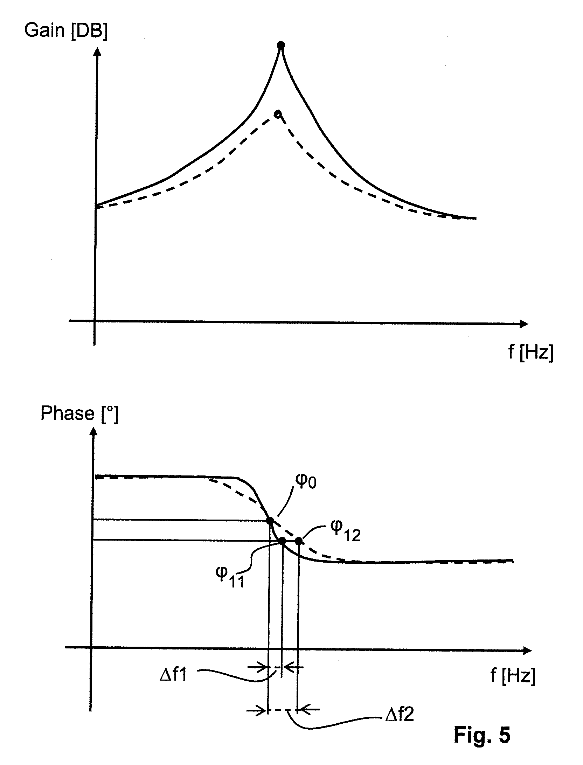

Untersucht man nun das geänderte Verhalten eines inhomogen befüllten Schwingers im Vergleich zum homogen befüllten Schwingers im bekannten Bodediagramm, erkennt man in Fig. 5 aus der Verbreiterung des Amplitudenspektrums, dass auch die Frequenzverschiebung im phasenverschobenen Signal bzw. bei phasenverschobener Anregung für den inhomogen befüllten Schwinger größer sein muss.

Es gilt für die Differenz $\Delta f$ zwischen den in den unterschiedlichen Phasenlagen in Resonanz und phasenverschoben gemessenen sich einstellenden Resonanzfrequenzen f1 und f2, dass die Differenz für den homogen befüllten Schwinger kleiner sein muss:

$$\Delta f(homogen) \, <= \, \Delta f(inhomogen)$$

$$Mit : \Delta f_H = f1(\varphi_1)_H \, - f2(\varphi_2)_H$$

$$und \; :\Delta f_I = f1(\varphi_1)_I \, - f2(\varphi_2)_I$$

Man kann somit ein Kriterium für die maximal tolerierbare Differenz der beiden Frequenzen definieren, um das homogene Befüllen des Schwingers sicherzustellen und allenfalls eine Füllfehlerwarnung und/oder daraus auf den Befüllungsgrad rückschließen.

Es wird dazu in den Schaltkreis zur Anregung und Signalabnahme der Schwingungen zumindest das die Phasenlage des Schwingers bezüglich seiner Anregung durch den Erregerverstärker veränderndes Element 32 eingebracht. Zwischen dem "herkömmlichen" Erregersignal $\varphi$1 und dem um einen bestimmen Phasenwinkel verschobenen Anregungssignal $\varphi$2 kann durch Umschalten mit einem elektronischen Schalter 41 hin - und hergeschaltet werden. Dadurch wird der Schwinger bei Anregung mit etwa derselben bzw. gering unterschiedlicher Anregungsfrequenz in zwei unterschiedlichen Phasenlagen untersuchbar. Wird der Schwinger in Phase mit der Auslenkungsamplitude angeregt, so stellt sich die Resonanzfrequenz $f_1$ ein.

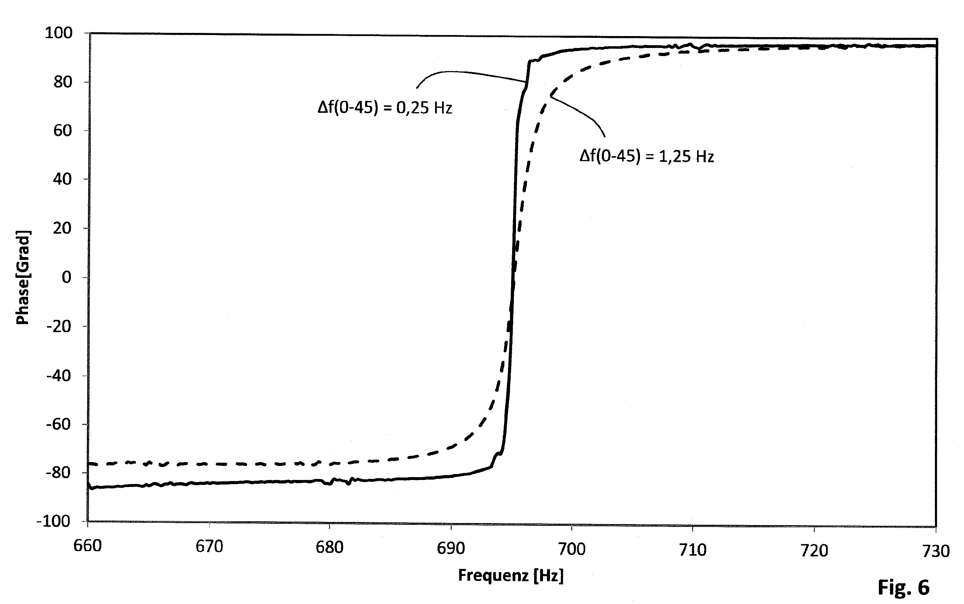

Stimmen die Phasenlagen von Anregung und Abnahme nicht überein, so ergibt sich eine etwas von der Resonanzfrequenz abweichende Frequenz $f_2$ sowie dies aus Fig. 6 ersichtlich ist.

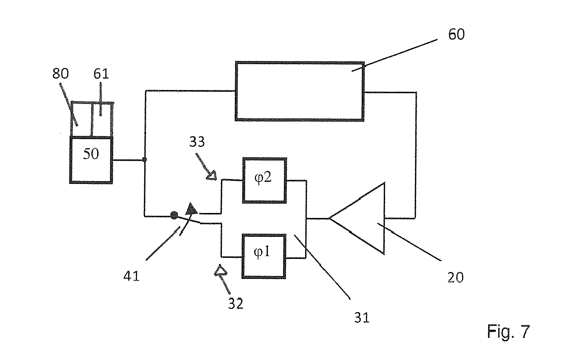

Fig. 7 zeigt ein Prinzipshaltbild einer erfindungsgemäßen Biegeschwingeranordnung. Die Eigenfrequenz des mit einem Medium gefüllten Biegeschwingers 60 bzw. Schwingerrohres 9 wird bestimmt, indem der Biegeschwinger 60 in einem harmonischen Oszillator betrieben wird. Das Abnahmesignal des Biegeschwingers wird mittels eines Verstärkers 20 verstärkt.

Ein Phasendreher 31 dreht die Phase dieses Signals derart, dass die Phasenbedingung der Schwingungsgleichung erfüllt ist dieses Signal wird bei 32 zur Verfügung gestellt. In einem parallelen Zweig 33 wird die Phase des Abnahmesignals zusätzlich um einen konstanten Wert verschoben. Dieses Signal steht bei 33 zur Verfügung.

Mittels eines elektronischen Schalters 41 wird nun zwischen den beiden Phasendrehern bzw. Zeigern 32, 33 umgeschaltet. Prinzipiell könnte auch ein zusätzlicher Phasendreher in den Schaltkreis eingebracht werden. Die resultierenden Eigenfrequenzen des Schwingrohres 9 werden mittels einer Frequenzmessung mit der Mess- bzw. Steuerelektronik 40 bzw. der Einheit 50 ermittelt.

Die Erregung ist hier schaltungsmäßig im Phasendreher 31 integriert, zusätzlich kann noch eine Abnahme bzw. Messung der sich einstellenden Frequenz in der Einheit 50 erfolgen.

Der Phasendreher 31 und Verstärker 20 bilden in Kombination den sogenannten Erregerverstärker. Mit einem derartigen Erregerverstärker kann der Schwinger in einen Zustand der Resonanzschwingung versetzt werden. Die Periodendauer bzw. Frequenz der Schwingung wird mit dem Frequenzmesser 50 gemessen und der Auswerteeinheit 40 zur Dichtebestimmung zugeführt, in der mit Hilfe von Justier- oder Kalibrierstandards für das zu untersuchende Fluid oder für unterschiedliche Viskositäten besitzende Fluide der Zusammenhang zwischen der Dämpfung und/oder Schwingungsamplitude des Biegeschwingers 60 und dem Befüllungsgrad des Schwingerrohrs 9 in einer Speichereinheit 80 abgespeichert vorliegt.

Der Biegeschwinger 60 wird mit diesem Erregerverstärker betrieben, der den Schwinger in einer seiner resonanten Eigenschwingungen erregt. Die Frequenz bzw. Periodendauer des Schwingers wird gemessen und kann in bekannter Weise bzw. unter Zuhilfenahme von Justier- bzw. Kalibrierdaten auch zur Ermittlung der Dichte des zu untersuchenden fluiden Mediums herangezogen werden.

Als Phasendreher fungiert im einfachsten Fall ein RC-Tiefpass, oder es können komplexere Filter höherer Ordnung bzw. sogenannte Totzeitglieder, im Allgemeinen eine Kombination aus Widerstand und Kondensator verwendet werden. Der Phasendreher bildet mit dem Verstärker und dem Schwinger einen Oszillator, der durch Rauschen oder einen anderen Initialimpuls selbst in die Resonanz hochschwingt.

Als relevanter Parameter für die Schwingungsamplitude könnte bei Änderung der Anregung bzw. Frequenzverschiebung der für Konstanthaltung der Amplitude erforderlichen Energiebetrag herangezogen werden, da bei Vorhandensein von Inhomogenitäten bzw. Blasen im Fluid die Amplitude abnimmt und für eine Beibehaltung einer konstanten Amplitude zusätzliche Energie für die Anregung erforderlich ist.

Ein vorteilhafter Aufbau des Biege-Schwingers sieht vor, dass eine Vergleichseinheit 61 vorgesehen ist, die die zu den beiden Phasenlagen ermittelten Resonanzfrequenzen miteinander vergleicht oder deren Differenz bildet, und dass in Abhängigkeit vom Vergleich oder der Größe der Differenz der Befüllungsgrad des Schwingrohres 9 ermittelt oder als ordnungsgemäß oder fehlerhaft erkannt wird.

**Patentansprüche**

1. Verfahren zur Ermittlung des Befüllungsgrads eines Schwingerrohrs eines Biegeschwingers mit einem zu untersuchenden Fluid, insbesondere im Zusammenhang mit der Dichtemessung von Fluiden mit diesem Biegeschwinger, **dadurch gekennzeichnet,**

   - **dass** mit Hilfe von Justier- oder Kalibrierstandards für das zu untersuchende Fluid oder für unterschiedliche Viskositäten besitzende Fluide der Zusammenhang zwischen der Dämpfung und/oder Schwingungsamplitude des Biegeschwingers (60) und dem Befüllungsgrad des Schwingerrohrs (9) ermittelt wird, und
   - **dass** im Zuge der Ermittlung des Befüllungsgrads ein für die Dämpfung und/oder Schwingungsamplitude des Biegeschwingers relevanter Parameter gemessen und dieser Messwert als für den Befüllungsgrad relevant und in funktionalem Zusammenhang stehend angesehen und zur Auswertung oder Ermittlung des Befüllungsgrads herangezogen wird.

2. Verfahren nach Anspruch 1, **dadurch gekennzeichnet, dass** zur Ermittlung des für die Dämpfung relevanten Parameters der Biegeschwinger in seiner jeweiligen Resonanzfrequenz durch zwei verschiedene Phasenlagen erregt wird und die zu der jeweiligen Phasenlage gehörige Resonanzfrequenz ermittelt und daraus auf den Befüllungsgrad geschlossen wird.

3. Verfahren nach Anspruch 1 oder 2, **dadurch gekennzeichnet,**

   - **dass** die zu den beiden Phasenlagen ermittelten Resonanzfrequenzen miteinander verglichen werden oder ihre Differenz gebildet wird, und
   - **dass** in Abhängigkeit vom Vergleich oder der Größe der Differenz der Befüllungsgrad ermittelt und gegebenenfalls als ordnungsgemäß oder fehlerhaft erkannt wird.

4. Verfahren nach einem der Ansprüche 1 bis 3, **dadurch gekennzeichnet, dass** die Resonanzfrequenzen mit einem mit dem zu untersuchenden Fluid gefüllten Biegeschwinger bestimmt werden, indem der Biegeschwinger in einem harmonischen Oszillator betrieben wird.

5. Verfahren nach einem der Ansprüche 1 bis 4, **dadurch gekennzeichnet, dass** als relevanter Parameter für die Schwingungsamplitude der für eine Konstanthaltung der Amplitude bei der Messung des Befüllungsgrades erforderliche Energiebetrag herangezogen wird.

6. Biegeschwinger mit einer Einheit zur Ermittlung des Befüllungsgrads des Schwingerrohrs (9) des Biegeschwingers mit einem zu untersuchenden Fluid, gegebenenfalls im Zusammenhang mit der Dichtemessung von Fluiden, insbesondere unter Anwendung des Verfahrens nach einem der Ansprüche 1 bis 6, **dadurch gekennzeichnet,**

   - **dass** die dem Biegeschwinger zugeordnete Einheit eine Speichereinheit (80) für den mit Hilfe von Justier- oder Kalibrierstandards, insbesondere für unterschiedliche Viskositäten besitzende Fluide, ermittelten Zusammenhang zwischen der Dämpfung und/oder der Schwingungsamplitude des Biegeschwingers und dem Befüllungsgrad des Schwingerrohrs (9) aufweist, und
   - **dass** der Biegeschwinger eine Auswerteinheit aufweist, die im Zuge der Ermittlung des Befüllungsgrads den für die Dämpfung des Biegeschwingers relevanten Parameter auswertet.

7. Biegeschwinger nach Anspruch 6, **dadurch gekennzeichnet, dass** der Biegeschwinger zur Ermittlung des für die Dämpfung relevanten Parameters einen Schwingungserreger aufweist, der das Schwingrohr (9) in seiner jeweiligen Resonanzfrequenz in zwei verschiedenen Phasenlagen erregt und dass mit der Auswerteinheit die zu der jeweiligen Phasenlage zugehörige Resonanzfrequenz ermittelt und daraus die Dämpfung bestimmt oder den zugehörigen Dämpfungswert errechnet.

8. Biegeschwinger nach Anspruch 6 oder 7, **dadurch gekennzeichnet,**

   - **dass** eine Vergleichseinheit (61) vorgesehen ist, die die zu den beiden Phasenlagen ermittelten Resonanzfrequenzen miteinander vergleicht oder deren Differenz bildet, und
   - **dass** in Abhängigkeit vom Vergleich oder der Größe der Differenz der Befüllungsgrad des Schwingrohres (9) ermittelt oder als ordnungsgemäß oder fehlerhaft erkannt wird.

9. Biegeschwinger nach einem der Ansprüche 6 bis 8, **dadurch gekennzeichnet, dass** der Biegeschwinger als harmonischer Oszillator ausgebildet ist und damit die Resonanzfrequenzen des mit zu untersuchendem Fluid gefüllten Biegeschwingers vorgegeben werden.

10. Biegeschwinger nach einem der Ansprüche 6 bis 9, **dadurch gekennzeichnet, dass** in den den Schwingungserreger (7) und den Schwingungsabnehmer (7') enthaltenden Schaltkreis, insbesondere in der Steuerungseinheit (40) ein Phasendreher eingeschaltet bzw. angeordnet ist.

Fig. 1

Fig. 2

Fig. 3

Fig. 4

EP 3 015 846 A1

Fig. 5

Fig. 6

Fig. 7

**Europäisches Patentamt**
**European Patent Office**
**Office européen des brevets**

# EUROPÄISCHER RECHERCHENBERICHT

**Nummer der Anmeldung**

EP 15 18 9384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AT 505 937 A4 (MESSTECHNIK DR HANS STABINGER [AT]) 15. Mai 2009 (2009-05-15) | 1,4,6,9, 10 | INV. G01N9/00 |
| Y | * Seite 2, Absatz 4 - Absatz 6 * <br> * Seite 6, letzter Absatz - Seite 7, Absatz 1 * <br> * Seite 5, letzter Absatz * <br> ----- | 2,3,5,7, 8 | G01F23/00 |
| Y | US 5 339 258 A (STABINGER HANS [AT] ET AL) 16. August 1994 (1994-08-16) | 2,3,7,8 | |
| A | * Spalte 2, Zeile 6 - Zeile 45 * <br><br> ----- | 1,4-6,9, 10 | |
| Y | US 8 707 763 B2 (VIACHASLAU URVANTSAU [FR] ET AL) 29. April 2014 (2014-04-29) | 5 | |
| A | * Spalte 1, Zeile 65 - Spalte 2, Zeile 35 * <br> ----- | 1-4,6-10 | |
| A | DE 22 39 903 A1 (INDUSTRIE AUTOMATION GMBH & CO) 28. Februar 1974 (1974-02-28) <br> * Seite 2, Absatz 1 * <br> ----- | 1-10 | |
| A | DE 10 2005 044929 B3 (SEPPELER STIFTUNG FUER FLUG UN [DE]) 21. Juni 2007 (2007-06-21) <br> * Absatz [0001] - Absatz [0002] * <br> ----- | 1-10 | RECHERCHIERTE SACHGEBIETE (IPC) <br><br> G01N <br> G01F |
| A | WO 2007/149838 A2 (RUDOLPH RES ANALYTICAL INC [US]) 27. Dezember 2007 (2007-12-27) <br> * Abbildung 1 * <br> * Seite 1, Zeile 7 - Zeile 23 * <br> ----- | 1-10 | |
| A | US 2009/084178 A1 (SINHA DIPEN N [US]) 2. April 2009 (2009-04-02) <br> * Absatz [0003] * <br> ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 15. März 2016 | Nierhaus, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 9384

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-03-2016

| Im Recherchenbericht angeführtes Patentdokument | Datum der Veröffentlichung | Mitglied(er) der Patentfamilie | Datum der Veröffentlichung |
|---|---|---|---|
| AT 505937 A4 | 15-05-2009 | AT 505937 A4<br>DE 102008051654 A1<br>JP 5284760 B2<br>JP 2009122109 A<br>US 2009126506 A1 | 15-05-2009<br>20-05-2009<br>11-09-2013<br>04-06-2009<br>21-05-2009 |
| US 5339258 A | 16-08-1994 | KEINE | |
| US 8707763 B2 | 29-04-2014 | EP 2402733 A1<br>ES 2432437 T3<br>FR 2962220 A1<br>JP 5220890 B2<br>JP 2012013692 A<br>US 2012073368 A1 | 04-01-2012<br>03-12-2013<br>06-01-2012<br>26-06-2013<br>19-01-2012<br>29-03-2012 |
| DE 2239903 A1 | 28-02-1974 | KEINE | |
| DE 102005044929 B3 | 21-06-2007 | KEINE | |
| WO 2007149838 A2 | 27-12-2007 | US 2007289376 A1<br>US 2008216569 A1<br>US 2011167909 A1<br>WO 2007149838 A2 | 20-12-2007<br>11-09-2008<br>14-07-2011<br>27-12-2007 |
| US 2009084178 A1 | 02-04-2009 | AU 2008307636 A1<br>CA 2700851 A1<br>CN 101809420 A<br>EA 201000579 A1<br>GB 2466153 A<br>GB 2480562 A<br>US 2009084178 A1<br>WO 2009045363 A1 | 09-04-2009<br>29-04-2009<br>18-08-2010<br>29-10-2010<br>16-06-2010<br>23-11-2011<br>02-04-2009<br>09-04-2009 |

EPO FORM P0461

Für nähere Einzelheiten zu diesem Anhang : siehe Amtsblatt des Europäischen Patentamts, Nr.12/82